# EUROPEAN PATENT APPLICATION

(11) **EP 2 502 495 A1**
(43) Date of publication of application: **26.09.2012**
(21) Application number: 11158497.5
(22) Date of filing: 16.03.2011
(51) Int. Cl.: A01N 3/00, A01N 43/90, A01P 3/00, A23B 7/154

(54) **Use of a dithiino-tetracarboxamide for the protection of harvested products against phytopathogenic fungi**

(71) Applicant: Bayer CropScience AG, 40789 Monheim (DE)
(72) Inventor: The designation of the inventor has not yet been filed

(57) **Abstract**

The present invention relates to methods for the protection of harvested fruits, cutflowers or vegetables against decay caused by certain storage diseases or disorders expressed in storage conditions, which fruits, cutflowers or vegetables have been treated pre-harvest with dithiino-tetracarboximides of formula (I). In particular the invention relates to the application of dithiino-tetracarboximides of formula (I) before harvest to protect harvested fruit, cutflowers or vegetables against phytopathogenic fungi.

## Description

The present invention relates to methods for the protection of harvested fruits, cutflowers or vegetables against decay caused by certain storage diseases or disorders expressed in storage conditions, which fruits, cutflowers or vegetables have been treated pre-harvest with dithiino-tetracarboximides of formula (I). In particular the invention relates to the application of dithiino-tetracarboximides of formula (I) before harvest to protect harvested fruit, cutflowers or vegetables against phytopathogenic fungi.

The purpose of any pre-harvest plant protection program for fruit, cutflowers and vegetables is to prevent the development of diseases that might impair the final quality of the fruit, cutflowers and vegetables and to obtain adequate production yields. The system for post-harvest application of plant protection products on fruit, cutflowers and vegetables during packing aims to safeguard the health of the fruit and vegetables during the period of storage and transport to the final consumer. Since, moreover, the environmental and economic requirements imposed on modem-day fungicides are continually increasing, with regard, for example, to the spectrum of activity, toxicity, selectivity, application rate, formation of residues, and favorable preparation ability, and since, furthermore, there may be problems, for example, with resistances developing to known active compounds, a constant task is to develop new fungicide agents which in some areas at least have advantages over their known counterparts. Therefore, there is still a need to find and/or develop other fungicides for storage disease control. Dithiino-tetracarboximides as such are already known. It is also known, that these compounds can be used as anthelmintics and insecticides (cf. US 3,364,229). Furthermore the fungicidal use of such dithiino-tetracarboximides is known (WO 2010/043319).

It has now been found, surprisingly, that dithiino-tetracarboximides may be used to protect fruits, cutflowers and vegetables against storage diseases if the dithiino-tetracarboximides are applied before harvest (pre-harvest). The invention furthermore relates to a method of combating certain storage diseases by pre-harvest treatment of the crops infested with these diseases employing dithiino-tetracarboximides.

An advantage is that while using the dithiino-tetracarboximides as pre-harvest treatment the control of storage diseases is achieved for a long time after harvest to allow transport of the harvested fruits, cutflowers or vegetables over long distances.

Accordingly, the present invention relates to the use of at least one dithiino-tetracarboximide of the formula (I) 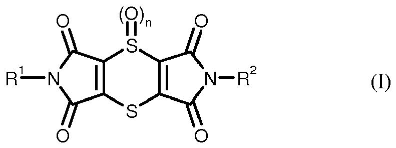 in which
R¹ and R² are identical or different and represent hydrogen, C₁-C₈-alkyl which is optionally monosubstituted or polysubstituted by halogen, -OR³, -COR⁴, or represent C₃-C₇-cycloalkyl which are optionally monosubstituted or polysubstituted by halogen, C₁-C₄-alkyl or C₁-C₄-haloalkyl, or represent aryl or aryl-(C₁-C₄-alkyl), each of which is optionally monosubstituted or polysubstituted by halogen, C₁-C₄-alkyl, C₁-C₄-haloalkyl, -COR⁴ or sulphonylamino,
R³ represents hydrogen, C₁-C₄-alkyl, C₁-C₄-alkylearbonyl, or represents aryl which is optionally monosubstituted or polysubstituted by halogen, C₁-C₄-alkyl or C₁-C₄-haloalkyl,
R⁴ represents hydroxyl, C₁-C₄-alkyl or C₁-C₄-alkoxy,
n represents 0 or 1,
or an agrochemically acceptable salt thereof,
to protect fruits, cutflowers or vegetables against phytopathogenic fungi, characterized in that the dithiino-tetracarboximide of the formula (I) are applied pre-harvest.

The invention furthermore relates to a method of combating storage diseases by treating the fruits, cutflowers or vegetables before harvest with at least one dithiino-tetracarboximide of the formula (I) 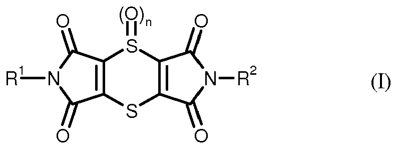 in which R¹ and R² are as defined above.

Formula (I) provides a general definition of the dithiine-tetracarboximides which can be used in accordance with the invention. Carboximides of the formula (I) in which the radicals have the meanings hereinbelow can preferably be used.
R¹ and R² are preferably identical or different and preferably represent hydrogen, or represent C₁-C₆-alkyl which is optionally monosubstituted or polysubstituted by fluorine, chlorine, bromine, -OR³, -COR⁴, or represent C₃-C₇-cycloalkyl which is optionally monosubstituted or polysubstituted by chlorine, methyl or trifluoromethyl, or represent phenyl or phenyl-(C₁-C₄-alkyl), each of which is optionally monosubstituted or polysubstituted by fluorine, chlorine, bromine, methyl, trifluoromethyl, -COR⁴, sulphonylamino.
R¹ and R² are especially preferably identical or different and especially preferably represent hydrogen, or represent C₁-C₄-alkyl which is optionally monosubstituted or polysubstituted by fluorine, chlorine, hydroxyl, methoxy, ethoxy, methylcarbonyloxy, carboxyl, or represent C₃-C₇-cycloalkyl which is optionally monosubstituted or polysubstituted by chlorine, methyl or trifluoromethyl, or represent phenyl, benzyl, 1-phenethyl, 2-phenethyl or 2-methyl-2-phenethyl, each of which is optionally monosubstituted to trisubstituted by fluorine, chlorine, bromine, methyl, trifluoromethyl, -COR⁴, sulphonylamino.
R¹ and R² are very especially preferably identical or different and very especially preferably represent hydrogen, methyl, ethyl, n-propyl, isopropyl, 2,2-difluoroethyl, 2,2,2-trifluoroethyl, or represent cyclopropyl or cyclohexyl, each of which is optionally substituted by chlorine, methyl or trifluoromethyl.
R¹ and R² particularly preferably simultaneously represent methyl.
R³ preferably represents hydrogen, methyl, ethyl, methylcarbonyl, ethylcarbonyl or represents phenyl which is optionally monosubstituted or polysubstituted by fluorine, chlorine, methyl, ethyl, n-propyl, isopropyl or trifluoromethyl.
R³ especially preferably represents hydrogen, methyl, methylcarbonyl or phenyl.
R⁴ preferably represents hydroxyl, methyl, ethyl, methoxy or ethoxy.
R⁴ especially preferably represents hydroxyl or methoxy.
n preferably represents 0.
n preferably also represents 1.
n especially preferably represents 0.

The following compounds may be mentioned individually:
(I-1) 2,6-dimethyl-1H,5H-[1,4]dithiino[2,3-c:5,6-c']dipyrrole-1,3,5,7(2H,6H)-tetrone (i.e. R¹=R²=methyl, n=0)
(I-2) 2,6-diethyl-1H,5H-[1,4]dithiino[2,3-c:5,6-c']dipyrrole-1,3,5,7(2H,6H)-tetrone (i.e. R¹=R²=ethyl, n=0)
(I-3) 2,6-dipropyl-1H,5H-[1,4]dithiino[2,3-c:5,6-c']dipyrrole-1,3,5,7(2H,6H)-tetrone (i.e. R¹=R²=propyl, n=0)
(I-4) 2,6-diisopropyl-1H,5H-[1,4]dithiino[2,3-c:5,6-c']dipyrrole-1,3,5,7(2H,6H)-tetrone (i.e. R¹=R²=isopropyl, n=0)
(I-5) 2,6-dimethyl-1H,5H-[1,4]dithiino[2,3-c:5,6-c']dipyrrole-1,3,5,7(2H,6H)-tetrone 4-oxide (i.e.
R¹=R²=methyl, n=1)

Compounds (I-1), (I-2) and (I-3) can be used with special preference, in particular compound (I-1).

According to the invention fruits, cutflowers or vegetables are treated with dithiino-tetracarboximide of the formula (I) between 1 week and 4 weeks, preferably between 2 and 3 weeks before harvest.

According to the invention fruits, cutflowers or vegetables are protected for at least 21 days, preferably for a period of 21 to 360 days, more preferably for a period of 45 to 250 days.

According to the invention storage diseases may be caused for example by the following fungi:
Colletotrichum spp., e.g. Colletotrichum musae, Colletotrichum gloeosporioides, Colletotrichum coccodes; Fusarium spp., e.g. Fusarium semitectum, Fusarium moniliforme, Fusarium solani, Fusarium oxysporum; Verticillium spp., e.g. Verticillium theobromae; Nigrospora spp.; Botrytis spp., e.g. Botrytis cinerea; Geotrichum spp., e.g. Geotrichum candidum; Phomopsis spp., Phomopsis natalensis; Diplodia spp., e.g. Diplodia citri; Altemaria spp., e.g. Alternaria citri, Alternaria altemata; Phytophthora spp., e.g. Phytophthora citrophthora, Phytophthora fragariae, Phytophthora cactorum, Phytophthora parasitica; Septoria spp., e.g. Septoria depressa; Mucor spp., e.g. Mucor piriformis; Monilinia spp., e.g. Monilinia fructigena, Monilinia laxa; Venturia spp., e.g. Venturia inaequalis, Venturia pyrina; Rhizopus spp., e.g. Rhizopus stolonifer, Rhizopus oryzae; Glomerella spp., e.g. Glomerella cingulata; Sclerotinia spp., e.g. Sclerotinia fruiticola; Ceratocystis spp., e.g. Ceratocystis paradoxa; Penicillium spp., e.g. Penicillium funiculosum, Penicillium expansum, Penicillium digitatum, Penicillium italicum; Gloeosporium spp., e.g. Gloeosporium album, Gloeosporium perennans, Gloeosporium fructigenum, Gloeosporium singulata; Phlyctaena spp., e.g. Phlyctaena vagabunda; Cylindrocarpon spp., e.g. Cylindrocarpon mali; Stemphyllium spp., e.g. Stemphyllium vesicarium; Phacydiopycnis spp., e.g. Phacydiopycnis malirum; Thielaviopsis spp., e.g. Thielaviopsis paradoxy; Aspergillus spp., e.g. Aspergillus niger, Aspergillus carbonarius; Nectria spp., e.g. Nectria galligena; Pezicula spp.

According to the invention, storage disorders are for example scald, scorch, softening, senescent breakdown, lenticel spots, bitter pit, browning, water core, vascular breakdown, CO₂ injury, CO₂ deficiency and O₂ deficiency.

Fruits, cutflowers and vegetables to be treated according to the invention are particularly selected from cereals, e.g. wheat, barley, rye, oats, rice, sorghum and the like; beets, e.g. sugar beet and fodder beet; pome and stone fruit and berries, e.g. apples, pears, plums, peaches, almonds, cherries, strawberries, raspberries and blackberries; leguminous plants, e.g. beans, lentils, peas, soy beans; oleaginous plants, e.g. rape, mustard, poppy, olive, sunflower, coconut, castor-oil plant, cocoa, ground-nuts; cucurbitaceae, e.g. pumpkins, gherkins, melons, cucumbers, squashes; fibrous plants, e.g. cotton, flax, hemp, jute; citrus fruit, e.g. orange, lemon, grapefruit, mandarin; tropical fruit, e.g. papaya, passion fruit, mango, carambola, pineapple, banana; vegetables, e.g. spinach, lettuce, asparagus, brassicaceae such as cabbages and turnips, carrots, onions, tomatoes, potatoes, hot and sweet peppers; laurel-like plants, e.g. avocado, cinnamon, camphor tree; or plants such as maize, tobacco, nuts, coffee, sugar-cane, tea, grapevines, hops, rubber plants, as well as ornamental plants, e.g. cutflowers, roses, gerbera and flower bulbs, shrubs, deciduous trees and evergreen trees such as conifers. This enumeration of culture plants is given with the purpose of illustrating the invention and not to delimiting it thereto.

Particularly preferred is the treatment of pome and stone fruit and berries, in particular apples, pears, plums, peaches, almonds, cherries, strawberries, raspberries and blackberries.

Particularly preferred is the treatment of citrus fruit, in particular orange, lemon, grapefruit, mandarin. Particularly preferred is the treatment of tropical fruit, in particular papaya, passion fruit, mango, carambola, pineapple, banana.

Particularly preferred is the treatment of grapevines.

The fungicides used according to the invention are generally applied in form of a composition comprising at least one dithiino-tetracarboximide fungicide as mentioned above. Preferably the fungicidal composition comprises agriculturally acceptable additives, solvents, carriers, surfactants, or extenders.

According to the invention, carrier is to be understood as meaning a natural or synthetic, organic or inorganic substance which is mixed or combined with the active compounds for better applicability, in particular for application to plants or plant parts or seeds. The carrier, which may be solid or liquid, is generally inert and should be suitable for use in agriculture.

Suitable solid or liquid carriers are: for example ammonium salts and natural ground minerals, such as kaolins, clays, talc, chalk, quartz, attapulgite, montmorillonite or diatomaceous earth, and ground synthetic minerals, such as finely divided silica, alumina and natural or synthetic silicates, resins, waxes, solid fertilizers, water, alcohols, especially butanol, organic solvents, mineral oils and vegetable oils, and also derivatives thereof. It is also possible to use mixtures of such carriers. Solid carriers suitable for granules are: for example crushed and fractionated natural minerals, such as calcite, marble, pumice, sepiolite, dolomite, and also synthetic granules of inorganic and organic meals and also granules of organic material, such as sawdust, coconut shells, maize cobs and tobacco stalks.

Suitable liquefied gaseous extenders or carriers are liquids which are gaseous at ambient temperature and under atmospheric pressure, for example aerosol propellants, such as butane, propane, nitrogen and CO₂.

Tackifiers, such as carboxymethylcellulose and natural and synthetic polymers in the form of powders, granules and latices, such as gum arabic, polyvinyl alcohol, polyvinyl acetate, or else natural phospholipids, such as cephalins and lecithins and synthetic phospholipids can be used in the formulations. Other possible additives are mineral and vegetable oils and waxes, optionally modified.

If the extender used is water, it is also possible for example, to use organic solvents as auxiliary solvents. Suitable liquid solvents are essentially: aromatic compounds, such as xylene, toluene or alkylnaphthalenes, chlorinated aromatic compounds or chlorinated aliphatic hydrocarbons, such as chlorobenzenes, chloroethylenes or methylene chloride, aliphatic hydrocarbons, such as cyclohexane or paraffins, for example mineral oil fractions, mineral and vegetable oils, alcohols, such as butanol or glycol, and also ethers and esters thereof, ketones, such as acetone, methyl ethyl ketone, methyl isobutyl ketone or cyclohexanone, strongly polar solvents, such as dimethylformamide and dimethyl sulphoxide, and also water.

The compositions according to the invention may comprise additional further components, such as, for example, surfactants. Suitable surfactants are emulsifiers, dispersants or wetting agents having ionic or nonionic properties, or mixtures of these surfactants. Examples of these are salts of polyacrylic acid, salts of lignosulphonic acid, salts of phenolsulphonic acid or naphthalenesulphonic acid, polycondensates of ethylene oxide with fatty alcohols or with fatty acids or with fatty amines, substituted phenols (preferably alkylphenols or arylphenols), salts of sulphosuccinic esters, taurine derivatives (preferably alkyl taurates), phosphoric esters of polyethoxylated alcohols or phenols, fatty esters of polyols, and derivatives of the compounds containing sulphates, sulphonates and phosphates. The presence of a surfactant is required if one of the active compounds and/or one of the inert carriers is insoluble in water and when the application takes place in water. The proportion of surfactants is between 5 and 40 per cent by weight of the composition according to the invention.

It is possible to use colorants such as inorganic pigments, for example iron oxide, titanium oxide, Prussian blue, and organic dyes, such as alizarin dyes, azo dyes and metal phthalocyanine dyes, and trace nutrients, such as salts of iron, manganese, boron, copper, cobalt, molybdenum and zinc.

If appropriate, other additional components may also be present, for example protective colloids, binders, adhesives, thickeners, thixotropic substances, penetrants, stabilizers, sequestering agents, complex formers. In general, the active compounds can be combined with any solid or liquid additive customarily used for formulation purposes.

In general, the compositions according to the invention comprise between 0.05 and 99 per cent by weight, 0.01 and 98 per cent by weight, preferable between 0.1 and 95 per cent by weight, particularly preferred between 0.5 and 90 per cent by weight of the active compound combination according to the invention, very particularly preferable between 10 and 70 per cent by weight.

The active compound combinations or compositions according to the invention can be used as such or, depending on their respective physical and/or chemical properties, in the form of their formulations or the use forms prepared therefrom, such as aerosols, capsule suspensions, cold-fogging concentrates, warm-fogging concentrates, encapsulated granules, fine granules, flowable concentrates for the treatment of seed, ready-to-use solutions, dustable powders, emulsifiable concentrates, oil-in-water emulsions, water-in-oil emulsions, macrogranules, microgranules, oil-dispersible powders, oil-miscible flowable concentrates, oil-miscible liquids, foams, pastes, pesticide-coated seed, suspension concentrates, suspoemulsion concentrates, soluble concentrates, suspensions, wettable powders, soluble powders, dusts and granules, water-soluble granules or tablets, water-soluble powders for the treatment of seed, wettable powders, natural products and synthetic substances impregnated with active compound, and also microencapsulations in polymeric substances and in coating materials for seed, and also ULV cold-fogging and warm-fogging formulations.

The formulations mentioned can be prepared in a manner known per se, for example by mixing the active compounds or the active compound combinations with at least one additive. Suitable additives are all customary formulation auxiliaries, such as, for example, organic solvents, extenders, solvents or diluents, solid carriers and fillers, surfactants (such as adjuvants, emulsifiers, dispersants, protective colloids, wetting agents and tackifiers), dispersants and/or binders or fixatives, preservatives, dyes and pigments, defoamers, inorganic and organic thickeners, water repellents, if appropriate siccatives and UV stabilizers, gibberellins and also water and further processing auxiliaries. Depending on the formulation type to be prepared in each case, further processing steps such as, for example, wet grinding, dry grinding or granulation may be required.

The compositions according to the invention do not only comprise ready-to-use compositions which can be applied with suitable apparatus to the plant or the seed, but also commercial concentrates which have to be diluted with water prior to use.

The active compound combinations according to the invention can be present in (commercial) formulations and in the use forms prepared from these formulations as a mixture with other (known) active compounds, such as insecticides, attractants, sterilants, bactericides, acaricides, nematicides, fungicides, growth regulators, herbicides, fertilizers, safeners and Semiochemicals.

The treatment according to the invention of the plants and plant parts with the active compounds or compositions is carried out directly or by action on their surroundings, habitat or storage space using customary treatment methods, for example by dipping, spraying, atomizing, irrigating, evaporating, dusting, fogging, broadcasting, foaming, painting, spreading-on, watering (drenching), drip irrigating and, in the case of propagation material, in particular in the case of seeds, furthermore as a powder for dry seed treatment, a solution for seed treatment, a water-soluble powder for slurry treatment, by incrusting, by coating with one or more layers, etc. It is furthermore possible to apply the active compounds by the ultra-low volume method, or to inject the active compound preparation or the active compound itself into the soil.

As already mentioned above, it is possible to treat all plants and their parts according to the invention. In a preferred embodiment, wild plant species and plant cultivars, or those obtained by conventional biological breeding methods, such as crossing or protoplast fusion, and parts thereof, are treated. In a further preferred embodiment, transgenic plants and plant cultivars obtained by genetic engineering methods, if appropriate in combination with conventional methods (genetically modified organisms), and parts thereof are treated. The terms "parts", "parts of plants" and "plant parts" have been explained above. Particularly preferably, plants of the plant cultivars which are in each case commercially available or in use are treated according to the invention. Plant cultivars are to be understood as meaning plants having novel properties ("traits") which have been obtained by conventional breeding, by mutagenesis or by recombinant DNA techniques. These can be cultivars, bio- or genotypes.

The method of treatment according to the invention can be used in the treatment of genetically modified organisms (GMOs), e.g. plants or seeds. Genetically modified plants (or transgenic plants) are plants of which a heterologous gene has been stably integrated into genome. The expression "heterologous gene" essentially means a gene which is provided or assembled outside the plant and when introduced in the nuclear, chloroplastic or mitochondrial genome gives the transformed plant new or improved agronomic or other properties by expressing a protein or polypeptide of interest or by downregulating or silencing other gene(s) which are present in the plant (using for example, antisense technology, cosuppression technology or RNA interference - RNAi - technology). A heterologous gene that is located in the genome is also called a transgene. A transgene that is defined by its particular location in the plant genome is called a transformation or transgenic event.

Plants and plant cultivars which are preferably to be treated according to the invention include all plants which have genetic material which impart particularly advantageous, useful traits to these plants (whether obtained by breeding and/or biotechnological means).

Plants and plant cultivars which are also preferably to be treated according to the invention are resistant against one or more biotic stresses, i.e. said plants show a better defense against animal and microbial pests, such as against nematodes, insects, mites, phytopathogenic fungi, bacteria, viruses and/or viroids.

Examples of nematode resistant plants are described in e.g. US Patent Application No's 11/765,491, 11/765,494, 10/926,819, 10/782,020, 12/032,479, 10/783,417, 10/782,096, 11/657,964, 12/192,904, 11/396,808, 12/166,253, 12/166,239, 12/166,124, 12/166,209, 11/762,886, 12/364,335, 11/763,947, 12/252,453, 12/209,354, 12/491,396 and 12/497,221.

Plants and plant cultivars which may also be treated according to the invention are those plants which are resistant to one or more abiotic stresses. Abiotic stress conditions may include, for example, drought, cold temperature exposure, heat exposure, osmotic stress, flooding, increased soil salinity, increased mineral exposure, ozone exposure, high light exposure, limited availability of nitrogen nutrients, limited availability of phosphorus nutrients, shade avoidance.

Plants and plant cultivars which may also be treated according to the invention, are those plants characterized by enhanced yield characteristics. Increased yield in said plants can be the result of, for example, improved plant physiology, growth and development, such as water use efficiency, water retention efficiency, improved nitrogen use, enhanced carbon assimilation, improved photosynthesis, increased germination efficiency and accelerated maturation. Yield can furthermore be affected by improved plant architecture (under stress and non-stress conditions), including but not limited to, early flowering, flowering control for hybrid seed production, seedling vigor, plant size, internode number and distance, root growth, seed size, fruit size, pod size, pod or ear number, seed number per pod or ear, seed mass, enhanced seed filling, reduced seed dispersal, reduced pod dehiscence and lodging resistance. Further yield traits include seed composition, such as carbohydrate content, protein content, oil content and composition, nutritional value, reduction in anti-nutritional compounds, improved processability and better storage stability.

Plants that may be treated according to the invention are hybrid plants that already express the characteristic of heterosis or hybrid vigor which results in generally higher yield, vigor, health and resistance towards biotic and abiotic stresses). Such plants are typically made by crossing an inbred male-sterile parent line (the female parent) with another inbred male-fertile parent line (the male parent). Hybrid seed is typically harvested from the male sterile plants and sold to growers. Male sterile plants can sometimes (e.g. in corn) be produced by detasseling, i.e. the mechanical removal of the male reproductive organs (or males flowers) but, more typically, male sterility is the result of genetic determinants in the plant genome. In that case, and especially when seed is the desired product to be harvested from the hybrid plants it is typically useful to ensure that male fertility in the hybrid plants is fully restored. This can be accomplished by ensuring that the male parents have appropriate fertility restorer genes which are capable of restoring the male fertility in hybrid plants that contain the genetic determinants responsible for male-sterility. Genetic determinants for male sterility may be located in the cytoplasm. Examples of cytoplasmic male sterility (CMS) were for instance described in Brassica species. However, genetic determinants for male sterility can also be located in the nuclear genome. Male sterile plants can also be obtained by plant biotechnology methods such as genetic engineering. A particularly useful means of obtaining male-sterile plants is described in WO 89/10396 in which, for example, a ribonuclease such as bamase is selectively expressed in the tapetum cells in the stamens. Fertility can then be restored by expression in the tapetum cells of a ribonuclease inhibitor such as barstar.

Plants or plant cultivars (obtained by plant biotechnology methods such as genetic engineering) which may be treated according to the invention are herbicide-tolerant plants, i.e. plants made tolerant to one or more given herbicides. Such plants can be obtained either by genetic transformation, or by selection of plants containing a mutation imparting such herbicide tolerance.

Herbicide-resistant plants are for example glyphosate-tolerant plants, i.e. plants made tolerant to the herbicide glyphosate or salts thereof. Plants can be made tolerant to glyphosate through different means. For example, glyphosate-tolerant plants can be obtained by transforming the plant with a gene encoding the enzyme 5-enolpyruvylshikimate-3-phosphate synthase (EPSPS). Examples of such EPSPS genes are the AroA gene (mutant CT7) of the bacterium *Salmonella typhimurium* (Comai et al., 1983, Science 221, 370-371), the CP4 gene of the bacterium *Agrobacterium sp.* (Barry et al., 1992, Curr. Topics Plant Physiol. 7, 139-145), the genes encoding a Petunia EPSPS (Shah et al., 1986, Science 233, 478-481), a Tomato EPSPS (Gasser et al., 1988, J. Biol. Chem. 263, 4280-4289), or an Eleusine EPSPS (WO 01/66704). It can also be a mutated EPSPS. Glyphosate-tolerant plants can also be obtained by expressing a gene that encodes a glyphosate oxido-reductase enzyme. Glyphosate-tolerant plants can also be obtained by expressing a gene that encodes a glyphosate acetyl transferase enzyme. Glyphosate-tolerant plants can also be obtained by selecting plants containing naturally-occurring mutations of the above-mentioned genes. Plants expressing EPSPS genes that confer glyphosate tolerance are described. Plants comprising other genes that confer glyphosate tolerance, such as decarboxylase genes, are described.

Other herbicide resistant plants are for example plants that are made tolerant to herbicides inhibiting the enzyme glutamine synthase, such as bialaphos, phosphinothricin or glufosinate. Such plants can be obtained by expressing an enzyme detoxifying the herbicide or a mutant glutamine synthase enzyme that is resistant to inhibition. One such efficient detoxifying enzyme is an enzyme encoding a phosphinothricin acetyltransferase (such as the bar or pat protein from Streptomyces species). Plants expressing an exogenous phosphinothricin acetyltransferase are described.

Further herbicide-tolerant plants are also plants that are made tolerant to the herbicides inhibiting the enzyme hydroxyphenylpyruvatedioxygenase (HPPD). HPPD is an enzyme that catalyze the reaction in which para-hydroxyphenylpyruvate (HPP) is transformed into homogentisate. Plants tolerant to HPPD-inhibitors can be transformed with a gene encoding a naturally-occurring resistant HPPD enzyme, or a gene encoding a mutated or chimeric HPPD enzyme as described in WO 96/38567, WO 99/24585, WO 99/24586, WO 2009/144079, WO 2002/046387, or US 6,768,044. Tolerance to HPPD-inhibitors can also be obtained by transforming plants with genes encoding certain enzymes enabling the formation of homogentisate despite the inhibition of the native HPPD enzyme by the HPPD-inhibitor. Such plants and genes are described in WO 99/34008 and WO 02/36787. Tolerance of plants to HPPD inhibitors can also be improved by transforming plants with a gene encoding an enzyme having prephenate deshydrogenase (PDH) activity in addition to a gene encoding an HPPD-tolerant enzyme, as described in WO 2004/024928. Further, plants can be made more tolerant to HPPD-inhibitor herbicides by adding into their genome a gene encoding an enzyme capable of metabolizing or degrading HPPD inhibitors, such as the CYP450 enzymes shown in WO 2007/103567 and WO 2008/150473.

Still further herbicide resistant plants are plants that are made tolerant to acetolactate synthase (ALS) inhibitors. Known ALS-inhibitors include, for example, sulfonylurea, imidazolinone, triazolopyrimidines, pryimidinyoxy(thio)benzoates, and/or sulfonylaminocarbonyltriazolinone herbicides. Different mutations in the ALS enzyme (also known as acetohydroxyacid synthase, AHAS) are known to confer tolerance to different herbicides and groups of herbicides, as described for example in Tranel and Wright (2002, Weed Science 50:700-712). The production of sulfonylurea-tolerant plants and imidazolinone-tolerant plants is described. Other imidazolinone-tolerant plants are also described. Further sulfonylurea- and imidazolinone-tolerant plants are also described.

Other plants tolerant to imidazolinone and/or sulfonylurea can be obtained by induced mutagenesis, selection in cell cultures in the presence of the herbicide or mutation breeding as described for example for soybeans in U.S. Patent 5,084,082, for rice in WO 97/41218, for sugar beet in U.S. Patent 5,773,702 and WO 99/057965, for lettuce in U.S. Patent 5,198,599, or for sunflower in WO 01/065922.

Plants or plant cultivars (obtained by plant biotechnology methods such as genetic engineering) which may also be treated according to the invention are insect-resistant transgenic plants, i.e. plants made resistant to attack by certain target insects. Such plants can be obtained by genetic transformation, or by selection of plants containing a mutation imparting such insect resistance.

An "insect-resistant transgenic plant", as used herein, includes any plant containing at least one transgene comprising a coding sequence encoding:
1) an insecticidal crystal protein from *Bacillus thuringiensis* or an insecticidal portion thereof, such as the insecticidal crystal proteins listed by Crickmore et al. (1998, Microbiology and Molecular Biology Reviews, 62: 807-813), updated by Crickmore et al. (2005) at the *Bacillus thuringiensis* toxin nomenclature, online at: http://www.lifesci.sussex.ac.uk/Home/Neil_Crickmore/Bt/). or insecticidal portions thereof, e.g., proteins of the Cry protein classes Cry1Ab, Cry1Ac, Cry1B, Cry1C Cry1D Cry1F Cry2Ab, Cry3Aa, or Cry3Bb or insecticidal portions thereof (e.g. EP 1999141 and WO 2007/107302), or such proteins encoded by synthetic genes as e.g. described in US Patent Application No 12/249,016 ; or
2) a crystal protein from *Bacillus thuringiensis* or a portion thereof which is insecticidal in the presence of a second other crystal protein from *Bacillus thuringiensis* or a portion thereof, such as the binary toxin made up of the Cry34 and Cry35 crystal proteins (Moellenbeck et al. 2001, Nat. Biotechnol. 19: 668-72; Schnepf et al. 2006, Applied Environm. Microbiol. 71, 1765-1774) or the binary toxin made up of the Cry1A or Cry1F proteins and the Cry2Aa or Cry2Ab or Cry2Ae proteins (US Patent Appl. No. 12/214,022 and EP 08010791.5); or
3) a hybrid insecticidal protein comprising parts of different insecticidal crystal proteins from *Bacillus thuringiensis,* such as a hybrid of the proteins of 1) above or a hybrid of the proteins of 2) above, e.g., the Cry1A.105 protein produced by corn event MON89034 (WO 2007/027777); or
4) a protein of any one of 1) to 3) above wherein some, particularly 1 to 10, amino acids have been replaced by another amino acid to obtain a higher insecticidal activity to a target insect species, and/or to expand the range of target insect species affected, and/or because of changes introduced into the encoding DNA during cloning or transformation, such as the Cry3Bb1 protein in corn events MON863 or MON88017, or the Cry3A protein in corn event MIR604; or
5) an insecticidal secreted protein from Bacillus thuringiensis or Bacillus cereus, or an insecticidal portion thereof, such as the vegetative insecticidal (VIP) proteins listed at: http://www.lifesci.sussex.ac.uk/home/Neil_Crickmore/Bt/vip.htnil, e.g., proteins from the VIP3Aa protein class; or
6) a secreted protein from *Bacillus thuringiensis* or *Bacillus cereus* which is insecticidal in the presence of a second secreted protein from *Bacillus thuringiensis* or *B. cereus,* such as the binary toxin made up of the VIP1A and VIP2A proteins (WO 94/21795); or
7) a hybrid insecticidal protein comprising parts from different secreted proteins from *Bacillus thuringiensis* or *Bacillus cereus,* such as a hybrid of the proteins in 1) above or a hybrid of the proteins in 2) above; or
8) a protein of any one of 5) to 7) above wherein some, particularly 1 to 10, amino acids have been replaced by another amino acid to obtain a higher insecticidal activity to a target insect species, and/or to expand the range of target insect species affected, and/or because of changes introduced into the encoding DNA during cloning or transformation (while still encoding an insecticidal protein), such as the VIP3Aa protein in cotton event COT102; or
9) a secreted protein from *Bacillus thuringiensis* or *Bacillus cereus* which is insecticidal in the presence of a crystal protein from *Bacillus thuringiensis,* such as the binary toxin made up of VIP3 and Cry1A or Cry1F (US Patent Appl. No. 61/126083 and 61/195019), or the binary toxin made up of the VIP3 protein and the Cry2Aa or Cry2Ab or Cry2Ae proteins (US Patent Appl. No. 12/214,022 and EP 08010791.5).
10) a protein of 9) above wherein some, particularly 1 to 10, amino acids have been replaced by another amino acid to obtain a higher insecticidal activity to a target insect species, and/or to expand the range of target insect species affected, and/or because of changes introduced into the encoding DNA during cloning or transformation (while still encoding an insecticidal protein).

Of course, an insect-resistant transgenic plant, as used herein, also includes any plant comprising a combination of genes encoding the proteins of any one of the above classes 1 to 10. In one embodiment, an insect-resistant plant contains more than one transgene encoding a protein of any one of the above classes 1 to 10, to expand the range of target insect species affected when using different proteins directed at different target insect species, or to delay insect resistance development to the plants by using different proteins insecticidal to the same target insect species but having a different mode of action, such as binding to different receptor binding sites in the insect.

An "insect-resistant transgenic plant", as used herein, further includes any plant containing at least one transgene comprising a sequence producing upon expression a double-stranded RNA which upon ingestion by a plant insect pest inhibits the growth of this insect pest..

Plants or plant cultivars (obtained by plant biotechnology methods such as genetic engineering) which may also be treated according to the invention are tolerant to abiotic stresses. Such plants can be obtained by genetic transformation, or by selection of plants containing a mutation imparting such stress resistance. Particularly useful stress tolerance plants include:
1) plants which contain a transgene capable of reducing the expression and/or the activity of poly(ADP-ribose) polymerase (PARP) gene in the plant cells or plants.
2) plants which contain a stress tolerance enhancing transgene capable of reducing the expression and/or the activity of the PARG encoding genes of the plants or plants cells.
3) plants which contain a stress tolerance enhancing transgene coding for a plant-functional enzyme of the nicotineamide adenine dinucleotide salvage synthesis pathway including nicotinamidase, nicotinate phosphoribosyltransferase, nicotinic acid mononucleotide adenyl transferase, nicotinamide adenine dinucleotide synthetase or nicotine amide phosphorybosyltransferase.

Plants or plant cultivars (obtained by plant biotechnology methods such as genetic engineering) which may also be treated according to the invention show altered quantity, quality and/or storage-stability of the harvested product and/or altered properties of specific ingredients of the harvested product such as :
1) transgenic plants which synthesize a modified starch, which in its physical-chemical characteristics, in particular the amylose content or the amylose/amylopectin ratio, the degree of branching, the average chain length, the side chain distribution, the viscosity behaviour, the gelling strength, the starch grain size and/or the starch grain morphology, is changed in comparison with the synthesised starch in wild type plant cells or plants, so that this is better suited for special applications.
2) transgenic plants which synthesize non starch carbohydrate polymers or which synthesize non starch carbohydrate polymers with altered properties in comparison to wild type plants without genetic modification. Examples are plants producing polyfructose, especially of the inulin and levan-type, plants producing alpha-1,4-glucans, plants producing alpha-1,6 branched alpha-1,4-glucans, plants producing alteman,
3) transgenic plants which produce hyaluronan,
4) transgenic plants or hybrid plants, such as onions with characteristics such as 'high soluble solids content', 'low pungency' (LP) and/or 'long storage' (LS).

Plants or plant cultivars (that can be obtained by plant biotechnology methods such as genetic engineering) which may also be treated according to the invention are plants, such as cotton plants, with altered fiber characteristics. Such plants can be obtained by genetic transformation, or by selection of plants contain a mutation imparting such altered fiber characteristics and include:
a) Plants, such as cotton plants, containing an altered form of cellulose synthase genes;
b) Plants, such as cotton plants, containing an altered form of rsw2 or rsw3 homologous nucleic acids Plants, such as cotton plants, with increased expression of sucrose phosphate synthase;
c) Plants, such as cotton plants, with increased expression of sucrose synthase;
d) Plants, such as cotton plants, wherein the timing of the plasmodesmatal gating at the basis of the fiber cell is altered, e.g. through downregulation of fiber-selective β-1,3-glucanase;
e) Plants, such as cotton plants, having fibers with altered reactivity, e.g. through the expression of N-acetylglucosaminetransferase gene including nodC and chitin synthase genes.

Plants or plant cultivars (that can be obtained by plant biotechnology methods such as genetic engineering) which may also be treated according to the invention are plants, such as oilseed rape or related Brassica plants, with altered oil profile characteristics. Such plants can be obtained by genetic transformation, or by selection of plants contain a mutation imparting such altered oil profile characteristics and include:
a) Plants, such as oilseed rape plants, producing oil having a high oleic acid content.
b) Plants such as oilseed rape plants, producing oil having a low linolenic acid content.
c) Plant such as oilseed rape plants, producing oil having a low level of saturated fatty acids.

Plants or plant cultivars (that can be obtained by plant biotechnology methods such as genetic engineering) which may also be treated according to the invention are plants, such as potatoes which are virus-resistant, e.g. against potato virus Y (event SY230 and SY233 from Tecnoplant, Argentina), which are disease resistant, e.g. against potato late blight (e.g. RB gene), which show a reduction in cold-induced sweetening ( carrying the Nt-Inhh, IIR-INV gene) or which possess a dwarf phenotype (Gene A-20 oxidase).

Plants or plant cultivars (that can be obtained by plant biotechnology methods such as genetic engineering) which may also be treated according to the invention are plants, such as oilseed rape or related Brassica plants, with altered seed shattering characteristics. Such plants can be obtained by genetic transformation, or by selection of plants contain a mutation imparting such altered seed shattering characteristics and include plants such as oilseed rape plants with delayed or reduced seed shattering.

Particularly useful transgenic plants which may be treated according to the invention are plants containing transformation events, or combination of transformation events, that are the subject of petitions for non-regulated status, in the United States of America, to the Animal and Plant Health Inspection Service (APHIS) of the United States Department of Agriculture (USDA) whether such petitions are granted or are still pending. At any time this information is readily available from APHIS (4700 River Road Riverdale, MD 20737, USA), for instance on its internet site (URL http://www.aphis.usda.gov/brs/not_reg.html). On the filing date of this application the petitions for non-regulated status that were pending with APHIS or granted by APHIS were those which contains the following information:
- Petition : the identification number of the petition. Technical descriptions of the transformation events can be found in the individual petition documents which are obtainable from APHIS, for example on the APHIS website, by reference to this petition number. These descriptions are herein incorporated by reference.
- Extension of Petition : reference to a previous petition for which an extension is requested.
- Institution : the name of the entity submitting the petition.
- Regulated article : the plant species concerned.
- Transgenic phenotype : the trait conferred to the plants by the transformation event.
- Transformation event or line : the name of the event or events (sometimes also designated as lines or lines) for which nonregulated status is requested.
- APHIS documents : various documents published by APHIS in relation to the Petition and which can be requested with APHIS.

Particularly useful transgenic plants which may be treated according to the invention are plants which comprise one or more genes which encode one or more toxins, such as the following which are sold under the trade names YIELD GARD® (for example maize, cotton, soya beans), KnockOut® (for example maize),

BiteGard® (for example maize), Bt-Xtra® (for example maize), StarLink® (for example maize), Bollgard® (cotton), Nucotn® (cotton), Nucotn 33B®(cotton), NatureGard® (for example maize), Protecta® and New-Leaf® (potato). Examples of herbicide-tolerant plants which may be mentioned are maize varieties, cotton varieties and soya bean varieties which are sold under the trade names Roundup Ready® (tolerance to glyphosate, for example maize, cotton, soya bean), Liberty Link® (tolerance to phosphinotricin, for example oilseed rape), IMI® (tolerance to imidazolinones) and STS® (tolerance to sulphonylureas, for example maize). Herbicide-resistant plants (plants bred in a conventional manner for herbicide tolerance) which may be mentioned include the varieties sold under the name Clearfield® (for example maize).

Additional particularly useful plants containing single transformation events or combinations of transformation events are listed for example in the databases from various national or regional regulatory agencies (see for example http://gmoinfojrc.it/gmp_browse.aspx and http://ceragmc.org/index.php?evidcode=&hstIDXCode=&gType=&AbbrCode=&atCode=&stCode=&coIDCode=&ac tion=gm_crop_database&mode=Submit).

The dose of active compound/application rate usually applied in the method of treatment according to the invention is generally and advantageously from 0,005 to 70 % by weight, preferably from 0,01 to 20 % by weight, more preferably from 0,05 to 10 % by weight, dependimg on the type of formulation to be selected for specific application purposes.

The doses herein indicated are given as illustrative examples of the method according to the invention. A person skilled in the art will know how to adapt the application doses, notably according to the nature of the plant or crop to be treated.

The combination according to the invention can be used in order to protect plants within a certain time range after the treatment against pests and/or phytopathogenic fungi and/or microorganisms. The time range, in which protection is effected, spans in general up to 90 days, preferably up to 45 to 90 days after the treatment.

Furthermore combinations and compositions according to the invention may also be used to reduce the contents of mycotoxins in plants and the harvested plant material and therefore in foods and animal feed stuff made therefrom. Especially but not exclusively the following mycotoxins can be specified: Deoxynivalenole (DON), Nivalenole, 15-Ac-DON, 3-Ac-DON, T2- und HT2- Toxins, Fumonisines, Zearalenone Moniliformine, Fusarine, Diaceotoxyscirpenole (DAS), Beauvericine, Enniatine, Fusaroproliferine, Fusarenole, Ochratoxines, Patuline, Ergotalkaloides und Aflatoxines, which are caused for example by the following fungal diseases: *Fusarium spec.,* like *Fusarium acuminatum, F. avenaceum, F. crookwellense, F. culmorum, F. graminearum (Gibberella zeae), F. equiseti, F. fujikoroi, F. musarurrv, F. oxysporum, F. proliferaturrv, F. poae, F. pseudograminearum, F. sambucinum, F. scirpi, F. semitectum, F. solani, F. sporotrichoides, F. langsethiae, F. subglutinans, F. tricinctum, F. verticillioides* and others but also by *Aspergillus spec., Penicillium spec.* like *P. expansum, P. digitatum, P. italicum, Claviceps purpurea, Stachybotrys spec., Geotrichum candidum* and others.

### Use Examples

### Example 1: Venturia inaequalis / Apple

### Venturia inaequalis disease control fruits in storage

This example illustrates the efficacy of a composition according to the invention against *Venturia inaequalis* disease on apple. *Venturia spp.* is also infecting pears.

Field trials were implemented in 2010 in apple orchards in Germany to evaluate the performance of compound (I-1) against *Venturia inaequalis* belonging to a class of diseases developing during the growth apple season but also latent on fruits and developing in storage conditions.

A typical fungicide formulation containing 200 g/L of compound (I-1) was applied by 7 consecutive foliar sprays in 2010 from flowering stages early April, till early fruit growing stages (10 mm diameter), in June 2010 (last application on 6 June 2010). The trial was conducted according to standard experimental practice. Non infested fruits were stored in cold chamber after harvest the 28^{th} of September. Disease assessment was performed in January 2011, after a long period of storage to evaluate the effect of compound (I-1) applications.

Results from assessments of *Venturia inaequalis* incidence on fruits, 236 days after the 7^{th} spray demonstrated the efficacy of the composition when applied at rates ranging from 100 to 200 g ai/ha/mch (= active ingredient / hectare / meter canopy height).

### Results from one trial in Germany, 2010: Venturia inaequalis incidence on fruits (apples)

### (79.2 % incidence on fruits in untreated plots after storage)

| Composition | Rate g ai/ha/mch | % Efficacy (Abbott) on Fruits |
|---|---|---|
| (I-1) 200 SC | 100 | 57 |
| (I-1) 200 SC | 150 | 76 |
| (I-1) 200 SC | 200 | 81 |

### Example 2: Gloeosporium spp. / Apple

### Gloeosporium spp. disease control fruits in storage

This example illustrates the efficacy of a composition according to the invention against *Gloeosporium spp.* disease on apple. *Gloesporium album* is also infecting pears.

Field trials were implemented in 2010 in apple orchards in Italy to evaluate the performance of compound (I-1) against *Gloeosporium spp.* belonging to a class of diseases developing in storage conditions.

A typical fungicide formulation containing 200 g/L of compound (I-1) was applied by 3 consecutive foliar sprays in 2010 from fruit size close to final stage (70 mm diameter), end of August, till mid-ripening, end of September (last application on 23 September 2010, i.e. 2 weeks before harvest on 7 October 2010). The trial was conducted according to standard experimental practice. Disease assessment was performed on harvested fruits in January 2011, after a long period of storage to evaluate the effect of compound (I-1) applications.

Results from assessments of *Gloeosporium spp.* Incidence on fruits, 118 days after the 3^{rd} spray demonstrated the efficacy of the composition when applied at rates ranging from 100 to 300 g ai/ha/mch.

### Results from one trial in Italy, 2010: Gloeosporium spp. incidence on fruits (apples)

### (42 % incidence on fruits in untreated plots)

| Composition | Rate g ai/ha/mch | % Efficacy (Abbott) on Fruits |
|---|---|---|
| (I-1) 200 SC | 100 | 81.6 |
| (I-1) 200 SC | 200 | 84.8 |
| (I-1) 200 SC | 300 | 94.4 |

### Example 3: Gloeodes pomigena / Pears

### Gloeodes pomigena disease control fruits in storage

This example illustrates the efficacy of a composition according to the invention against *Gloeodes pomigena* disease on pears. This disease is also infecting apples.

Field trials were implemented in 2010 in pear orchard in Germany to evaluate the performance of compound (I-1) against fruit diseases. *Gloeodes pomigena* belongs to a class of diseases responsible for fruit decays in storage conditions.

A typical fungicide formulation containing 200 g/L of compound (I-1) was applied by 2 consecutive foliar sprays in 2010 from fruits at stage - beginning of ripening, end of August, till mid-ripening, end of September (last application on 20 September 2010, i.e. 2 weeks before harvest on 4 October 2010). The trial was conducted according to standard experimental practice. Disease assessment was performed on harvested fruits in January 2011, after a long period of storage to evaluate the effect of compound (I-1) applications.

Results from assessments of *Gloeodes pomigena:* Incidence on fruits, 122 days after the 2^{nd} spray demonstrated the increasing efficacy of the composition when applied at rates ranging from 100 to 300 g ai/ha/mch with an excellent protection at the highest rate. This protection against *Gloeodes pomigena* and other diseases has a high value with a dramatic increase of marketable fruits.

### Results from one trial in Germany, 2010-2011: Gloeodes pomigena- incidence on fruits (pears):

### (20.8 % incidence on fruits in untreated plots - 59,4% of marketable fruits after storage in untreated plots)

| Composition | Rate g ai/ha/mch | % Efficacy (Abbott) on Fruits | % Marketable Fruits (Untreated = 100) |
|---|---|---|---|
| (I-1) 200 SC | 100 | 38.3 | 131.7 |
| (I-1) 200 SC | 200 | 59.9 | 139.7 |
| (I-1) 200 SC | 300 | 80.1 | 154.4 |

### Example 4 - Glomerella cingulata / Mango

### Glomerella cingulata disease control fruits in storage

Field trials were implemented in 2010 in mango orchard in Brazil to evaluate the performance of compound (I-1) against *Glomerella cingulata* belonging to a class of diseases developing in storage conditions. A typical fungicide formulation containing 200 g/L of compound (I-1) was applied by 4 consecutive foliar sprays in 2010 and 2011 from fruit size 10 mm diameter, early November 2010, till early-ripening, beginning of January 2011 (last application on 4 January 2011, harvest of fruits on 20 January 2011). The trial was conducted according to standard experimental practice. Disease assessment was performed on harvested fruits in January 2011, after a period of storage to evaluate the effect of compound (I-1) applications.

Results from assessments of *Glomerella cingulata* severity on fruits, 24 days after the 4^{th} spray demonstrated the increasing efficacy of the composition when applied at rates ranging from 25 to 75 g ai/hl*.

### Results from one trial in Brazil, 2010: Glomerella cingulata severity on fruits (mango):

### (31 % severity on fruits in untreated plots)

| Composition | Rate g ai/hl* | % Efficacy (Abbott) on Fruits |
|---|---|---|
| (I-1) 200 SC | 25 | 40.2 |
| (I-1) 200 SC | 50 | 55.4 |
| (I-1) 200 SC | 75 | 68.5 |

| | | |
|---|---|---|
| (*) grams active ingredient per hectoliter - applications realized at 2000liters/ha | | |

## Claims

1. Use of at least one dithiino-tetracarboximide of the formula (I) 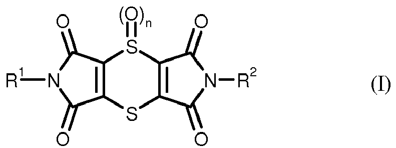 in which
R and R² are identical or different and represent hydrogen, C₁-C₈-alkyl which is optionally monosubstituted or polysubstituted by halogen, -OR³, -COR⁴, or represent C₃-C₇-cycloalkyl which are optionally monosubstituted or polysubstituted by halogen, C₁-C₄-alkyl or C₁-C₄-haloalkyl, or represent aryl or aryl-(C₁-C₄-alkyl), each of which is optionally monosubstituted or polysubstituted by halogen, C₁-C₄-alkyl, C₁-C₄-haloalkyl, -COR⁴ or sulphonylamino,
R³ represents hydrogen, C₁-C₄-alkyl, C₁-C₄-alkylcarbonyl, or represents aryl which is optionally monosubstituted or polysubstituted by halogen, C₁-C₄-alkyl or C₁-C₄-haloalkyl,
R⁴ represents hydroxyl, C₁-C₄-alkyl or C₁-C₄-alkoxy,
n represents 0 or 1,
or an agrochemically acceptable salt thereof,
to protect fruits, cutflowers or vegetables against phytopathogenic fungi, **characterized in that** the dithiino-tetracarboximide of the formula (I) are applied pre-harvest.

2. Use according to Claim 1, **characterized in that**
R¹ and R² are identical or different and represent hydrogen, or represent C₁-C₆-alkyl which is optionally monosubstituted or polysubstituted by fluorine, chlorine, bromine, -OR³, -COR⁴, or represent C₃-C₇-cycloalkyl which is optionally monosubstituted or polysubstituted by chlorine, methyl or trifluoromethyl, or represent phenyl or phenyl-(C₁-C₄-alkyl), each of which is optionally monosubstituted or polysubstituted by fluorine, chlorine, bromine, methyl, trifluoromethyl, -COR⁴, sulphonylamino,
R³ represents hydrogen, methyl, ethyl, methylcarbonyl, ethylcarbonyl or represents phenyl which is optionally monosubstituted or polysubstituted by fluorine, chlorine, methyl, ethyl, n-propyl, isopropyl or trifluoromethyl,
R⁴ represents hydroxyl, methyl, ethyl, methoxy or ethoxy,
n represents 0 or 1.

3. Use according to Claim 1, **characterized in that**
R¹ and R² are identical or different and represent hydrogen, or represent C₁-C₄-alkyl which is optionally monosubstituted or polysubstituted by fluorine, chlorine, hydroxyl, methoxy, ethoxy, methylcarbonyloxy, carboxyl, or represent C₃-C₇-cycloalkyl which is optionally monosubstituted or polysubstituted by chlorine, methyl or trifluoromethyl, or represent phenyl, benzyl, 1-phenethyl, 2-phenethyl or 2-methyl-2-phenethyl, each of which is optionally monosubstituted to trisubstituted by fluorine, chlorine, bromine, methyl, trifluoromethyl, -COR⁴, sulphonylamino,
R³ represents hydrogen, methyl, methylcarbonyl or phenyl,
R⁴ represents hydroxyl or methoxy,
n represents 0 or 1.

4. Use according to Claim 1, **characterized in that** R¹ and R² simultaneously represent methyl.

5. Use according to Claim 1, 2, 3 or 4, **characterized in that** diseases are caused by the fungi selected from Colletotrichum spp., e.g. Colletotrichum musae, Colletotrichum gloeosporioides, Colletotrichum coccodes; Fusarium spp., e.g. Fusarium semitectum, Fusarium moniliforme, Fusarium solani, Fusarium oxysporum; Verticillium spp., e.g. Verticillium theobromae; Nigrospora spp.; Botrytis spp., e.g. Botrytis cinerea; Geotrichum spp., e.g. Geotrichum candidum; Phomopsis spp., Phomopsis natalensis; Diplodia spp., e.g. Diplodia citri; Alternaria spp., e.g. Alternaria citri, Alternaria altemata; Phytophthora spp., e.g. Phytophthora citrophthora, Phytophthora fragariae, Phytophthora cactorum, Phytophthora parasitica; Septoria spp., e.g. Septoria depressa; Mucor spp., e.g. Mucor piriformis; Monilinia spp., e.g. Monilinia fructigena, Monilinia laxa; Venturia spp., e.g. Venturia inaequalis, Venturia pyrina; Rhizopus spp., e.g. Rhizopus stolonifer, Rhizopus oryzae; Glomerella spp., e.g. Glomerella cingulata; Sclerotinia spp., e.g. Sclerotinia fruiticola; Ceratocystis spp., e.g. Ceratocystis paradoxa; Penicillium spp., e.g. Penicillium funiculosum, Penicillium expansum, Penicillium digitatum, Penicillium italicum; Gloeosporium spp., e.g. Gloeosporium album, Gloeosporium perennans, Gloeosporium fructigenum, Gloeosporium singulata; Phlyctaena spp., e.g. Phlyctaena vagabunda; Cylindrocarpon spp., e.g. Cylindrocarpon mali; Stemphyllium spp., e.g. Stemphyllium vesicarium; Phacydiopycnis spp., e.g. Phacydiopycnis malirum; Thielaviopsis spp., e.g. Thielaviopsis paradoxy; Aspergillus spp., e.g. Aspergillus niger, Aspergillus carbonarius; Nectria spp., e.g. Nectria galligena; Pezicula spp.

6. Use according to Claim 1, 2, 3, 4 or 5, **characterized in that** fruit and vegetables are selected from cereals, e.g. wheat, barley, rye, oats, rice, sorghum and the like; beets, e.g. sugar beet and fodder beet; pome and stone fruit and berries, e.g. apples, pears, plums, peaches, almonds, cherries, strawberries, raspberries and blackberries; leguminous plants, e.g. beans, lentils, peas, soy beans; oleaginous plants, e.g. rape, mustard, poppy, olive, sunflower, coconut, castor-oil plant, cocoa, ground-nuts; cucurbitaceae, e.g. pumpkins, gherkins, melons, cucumbers, squashes; fibrous plants, e.g. cotton, flax, hemp, jute; citrus fruit, e.g. orange, lemon, grapefruit, mandarin; tropical fruit, e.g. papaya, passion fruit, mango, carambola, pineapple, banana; vegetables, e.g. spinach, lettuce, asparagus, brassicaceae such as cabbages and turnips, carrots, onions, tomatoes, potatoes, hot and sweet peppers; laurel-like plants, e.g. avocado, cinnamon, camphor tree; or plants such as maize, tobacco, nuts, coffee, sugar-cane, tea, grapevines, hops, rubber plants, as well as ornamental plants, e.g. cutflowers, roses, gerbera and flower bulbs, shrubs, deciduous trees and evergreen trees such as conifers.

7. Use according to Claim 1, 2, 3, 4, 5 or 6, **characterized in that** fruits, cutflowers or vegetables are treated with at least one dithiino-tetracarboximide of the formula (I) according to Claim 1, 2, 3 or 4 between 1 week and 4 weeks, preferably between 2 and 3 weeks, before harvest.

8. Use according to Claim 1, 2, 3, 4, 5, 6 or 7, **characterized in that** fruits, cutflowers or vegetables are protected for a period of at least 21 days, preferably for a period of 21 to 360 days, more preferably for a period of 45 to 250 days.

9. Method of combating storage diseases by treating the fruits, cutflowers or vegetables before harvest with at least one dithiino-tetracarboximide of the formula (I) 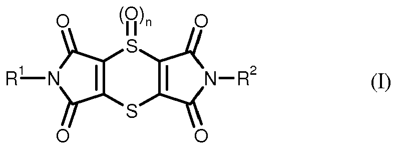 in which
R¹ and R² are identical or different and represent hydrogen, C₁-C₈-alkyl which is optionally monosubstituted or polysubstituted by halogen, -OR³, -COR⁴, or represent C₃-C₇-cycloalkyl which are optionally monosubstituted or polysubstituted by halogen, C₁-C₄-alkyl or C₁-C₄-haloalkyl, or represent aryl or aryl-(C₁-C₄-alkyl), each of which is optionally monosubstituted or polysubstituted by halogen, C₁-C₄-alkyl, C₁-C₄-haloalkyl, -COR⁴ or sulphonylamino,
R³ represents hydrogen, C₁-C₄-alkyl, C₁-C₄-alkylcarbonyl, or represents aryl which is optionally monosubstituted or polysubstituted by halogen, C₁-C₄-alkyl or C₁-C₄-haloalkyl,
R⁴ represents hydroxyl, C₁-C₄-alkyl or C₁-C₄-alkoxy,
n represents 0 or 1,
or an agrochemically acceptable salt thereof.

10. Method according to Claim 9, **characterized in that**
R¹ and R² are identical or different and represent hydrogen, or represent C₁-C₆-alkyl which is optionally monosubstituted or polysubstituted by fluorine, chlorine, bromine, -OR³, -COR⁴, or represent C₃-C₇-cycloalkyl which is optionally monosubstituted or polysubstituted by chlorine, methyl or trifluoromethyl, or represent phenyl or phenyl-(C₁-C₄-alkyl), each of which is optionally monosubstituted or polysubstituted by fluorine, chlorine, bromine, methyl, trifluoromethyl, -COR⁴, sulphonylamino,
R³ represents hydrogen, methyl, ethyl, methylcarbonyl, ethylcarbonyl or represents phenyl which is optionally monosubstituted or polysubstituted by fluorine, chlorine, methyl, ethyl, n-propyl, isopropyl or trifluoromethyl,
R⁴ represents hydroxyl, methyl, ethyl, methoxy or ethoxy,
n represents 0 or 1.

11. Method according to Claim 9, **characterized in that**
R¹ and R² are identical or different and represent hydrogen, or represent C₁-C₄-alkyl which is optionally monosubstituted or polysubstituted by fluorine, chlorine, hydroxyl, methoxy, ethoxy, methylcarbonyloxy, carboxyl, or represent C₃-C₇-cycloalkyl which is optionally monosubstituted or polysubstituted by chlorine, methyl or trifluoromethyl, or represent phenyl, benzyl, 1-phenethyl, 2-phenethyl or 2-methyl-2-phenethyl, each of which is optionally monosubstituted to trisubstituted by fluorine, chlorine, bromine, methyl, trifluoromethyl, -COR⁴, sulphonylamino,
R³ represents hydrogen, methyl, methylcarbonyl or phenyl,
R⁴ represents hydroxyl or methoxy,
n represents 0 or 1.

12. Method according to Claim 9, 10 or 11, **characterized in that** diseases are caused by the fungi selected from Colletotrichum spp., e.g. Colletotrichum musae, Colletotrichum gloeosporioides, Colletotrichum coccodes; Fusarium spp., e.g. Fusarium semitectum, Fusarium moniliforme, Fusarium solani, Fusarium oxysporum; Verticillium spp., e.g. Verticillium theobromae; Nigrospora spp.; Botrytis spp., e.g. Botrytis cinerea; Geotrichum spp., e.g. Geotrichum candidum; Phomopsis spp., Phomopsis natalensis; Diplodia spp., e.g. Diplodia citri; Alternaria spp., e.g. Alternaria citri, Alternaria altemata;
Phytophthora spp., e.g. Phytophthora citrophthora, Phytophthora fragariae, Phytophthora cactorum, Phytophthora parasitica; Septoria spp., e.g. Septoria depressa; Mucor spp., e.g. Mucor piriformis; Monilinia spp., e.g. Monilinia fructigena, Monilinia laxa; Venturia spp., e.g. Venturia inaequalis, Venturia pyrina; Rhizopus spp., e.g. Rhizopus stolonifer, Rhizopus oryzae; Glomerella spp., e.g. Glomerella cingulata; Sclerotinia spp., e.g. Sclerotinia fruiticola; Ceratocystis spp., e.g. Ceratocystis paradoxa; Penicillium spp., e.g. Penicillium funiculosum, Penicillium expansum, Penicillium digitatum, Penicillium italicum; Gloeosporium spp., e.g. Gloeosporium album, Gloeosporium perennans, Gloeosporium fructigenum, Gloeosporium singulata; Phlyctaena spp., e.g. Phlyctaena vagabunda; Cylindrocarpon spp., e.g. Cylindrocarpon mali; Stemphyllium spp., e.g. Stemphyllium vesicarium; Phacydiopycnis spp., e.g. Phacydiopycnis malirum; Thielaviopsis spp., e.g. Thielaviopsis paradoxy; Aspergillus spp., e.g. Aspergillus niger, Aspergillus carbonarius; Nectria spp., e.g. Nectria galligena; Pezicula spp.

13. Method according to Claim 9, 10, 11 or 12, **characterized in that** fruit and vegetables are selected from cereals, e.g. wheat, barley, rye, oats, rice, sorghum and the like; beets, e.g. sugar beet and fodder beet; pome and stone fruit and berries, e.g. apples, pears, plums, peaches, almonds, cherries, strawberries, raspberries and blackberries; leguminous plants, e.g. beans, lentils, peas, soy beans; oleaginous plants, e.g. rape, mustard, poppy, olive, sunflower, coconut, castor-oil plant, cocoa, ground-nuts; cucurbitaceae, e.g. pumpkins, gherkins, melons, cucumbers, squashes; fibrous plants, e.g. cotton, flax, hemp, jute; citrus fruit, e.g. orange, lemon, grapefruit, mandarin; tropical fruit, e.g. papaya, passion fruit, mango, carambola, pineapple, banana; vegetables, e.g. spinach, lettuce, asparagus, brassicaceae such as cabbages and turnips, carrots, onions, tomatoes, potatoes, hot and sweet peppers; laurel-like plants, e.g. avocado, cinnamon, camphor tree; or plants such as maize, tobacco, nuts, coffee, sugar-cane, tea, grapevines, hops, rubber plants, as well as ornamental plants, e.g. cutflowers, roses, gerbera and flower bulbs, shrubs, deciduous trees and evergreen trees such as conifers.

14. Method according to Claim 9, 10, 11, 12 or 13, **characterized in that** fruits, cutflowers or vegetables are treated with at least one dithiino-tetracarboximide of the formula (I) according to Claim 9, 10 or 11 between 1 week and 4 weeks, preferably between 2 and 3 weeks, before harvest.

15. Method according to Claim 9, 10, 11, 12, 13 or 14, **characterized in that** fruits, cutflowers or vegetables are protected for a period of at least 21 days, preferably for a period of 21 to 360 days, more preferably for a period of 45 to 250 days.
